# EUROPÄISCHE PATENTSCHRIFT

(11) **EP 2 199 256 B1**
(45) Veröffentlichungstag und Bekanntmachung des Hinweises auf die Patenterteilung: **24.07.2013**
(21) Anmeldenummer: 09178562.6
(22) Anmeldetag: 09.12.2009
(51) Int. Cl.: C01B 6/00, C01B 6/04, C01B 6/24

(54) **Verfahren zur Aktivierung oder Regeneration eines Wasserstoffspeichermaterials**
Method of activating or regenerating a hydrogen storage material
Méthode d'activation ou de régénération d'un matériau de stockage d'hydrogène

(30) Priorität: 19.12.2008 DE 102008063895
(43) Veröffentlichungstag der Anmeldung: 23.06.2010
(73) Patentinhaber: Helmholtz-Zentrum Geesthacht Zentrum für Material- und Küstenforschung GmbH, 21502 Geesthacht (DE)
(72) Erfinder: Barkhordarian, Gagik, 21502, Geesthacht (DE); Pistidda, Claudio, 21502 Geesthacht (DE); Dornheim, Martin, 21391, Reppenstedt (DE); Bormann, Rüdiger, 21224 Rosengarten (DE)
(74) Vertreter: UEXKÜLL & STOLBERG

(56) Entgegenhaltungen:
- BOGDANOVIC B ET AL: "Ti-doped alkali metal aluminium hydrides as potential novel reversible hydrogen storage materials" JOURNAL OF ALLOYS AND COMPOUNDS, ELSEVIER SEQUOIA, LAUSANNE, CH, Bd. 253-254, 20. Mai 1997 (1997-05-20), Seiten 1-9, XP004126498 ISSN: 0925-8388
- ZALUSKA A ET AL: "Sodium alanates for reversible hydrogen storage" JOURNAL OF ALLOYS AND COMPOUNDS, ELSEVIER SEQUOIA, LAUSANNE, CH, Bd. 298, Nr. 1-2, 1. Februar 2000 (2000-02-01), Seiten 125-134, XP004185245 ISSN: 0925-8388
- KOJIMA Y ET AL: "HYDROGEN GENERATION BY HYDROLYSIS REACTION OF MAGNESIUM HYDRIDE" JOURNAL OF MATERIALS SCIENCE, SPRINGER NETHERLANDS, NL, Bd. 39, Nr. 6, 15. März 2004 (2004-03-15), Seiten 2227-2229, XP001233089 ISSN: 0022-2461

## Beschreibung

Die vorliegende Erfindung betrifft ein Verfahren zur Aktivierung oder Regeneration eines Wasserstoffspeichermaterials, das mindestens ein Metallhydrid enthält.

Die Energiespeicherung mittels Wasserstoff gewinnt in jüngster Zeit immer mehr an Bedeutung. Es gibt heute verschiedene Techniken, um Wasserstoff zu speichern, bei denen zwischen der Speicherung in gasförmigem, flüssigem oder in Form von Metallhydriden in chemisch gebundenen Zustand unterscheiden werden kann. Die Speicherung von gasförmigen oder flüssigen Wasserstoff führt oft zu Sicherheitsproblemen. Vorteilhaft sind daher Wasserstoffspeichersysteme, in denen Wasserstoff in Form von Metallhydriden in chemisch gebundenen Zustand gespeichert vorliegt. Derartige Metallhydrid-Wasserstoffspeicher weisen einen Speicherzustand und einen Nichtspeicherzustand auf, zwischen denen sie im Wesentlichen reversibel überführbar sind.

Von besonderem Interesse als Metallhydrid-Wasserstoffspeicher sind die Aluminiumhydride NaAlH₄, LiAlH₄, Li₃AlH₆, LiNa₂AlH₆, Ca(AlH₄)₂ und Borhydride wie LiBH₄, NaBH₄, Mg(BH₄)₂, Ca(BH₄)₂ sowie Magnesiumhydrid (MgH₂) auf Grund ihrer relativ hohen massenbezogenen Wasserstoff-Speicherkapazität. Obwohl diese Eigenschaft und der relativ niedrige Materialpreis die oben genannten Syteme als optimales Wasserstoffspeichersystem für den Transport bei Fahrzeugen mit Wasserstoffantrieb erscheinen lassen, haben ihre unbefriedigenden Be- und Entladekinetiken ihre Verwendung bisher verhindert.

Es ist bekannt,dem Wasserstoffspeichermaterial zur Verbesserung der Kinetik bei der Absorption und Desorption von Wasserstoff einen Katalysator zuzumischen. Die WO 2005/019097 A1 offenbart die Verwendung eines Metallkarbonats als Katalysator zur Verbesserung der Kinetik bei der Absorption und Desorption von Wasserstoff. Die WO 2005/068073 A1 offenbart die Verwendung einer mtallorganischen Verbindung als Katalysator zur Verbesserung der Kinetik bei der Absorption und Desorption von Wasserstoff. Die WO 01/53195 A1 offenbart die Verwendung von Metallnitriden und -carbiden als Katalysator zur Verbesserung der Kinetik bei der Absorption und Desorption von Wasserstoff. Die WO 00/58206 A1 offenbart die Verwendung von Metalloxiden als Katalysator zur Verbesserung der Kinetik bei der Absorption und Desorption von Wasserstoff. Die DE 10 2005 019 108 B4 offenbart ein Verfahren zur Herstellung eines Metallhydrids enthaltenden Wasserstoffspeichermaterials, bei dem Metallhydridpulver in Gegenwart von 0,01 bis 10 Gew.-% Diamantpulver unter Inertgasatmosphäre, Wasserstoffatmosphäre oder Vakuum gemahlen wird. Die DE 35 35 378 A1 offenbart die Verwendung von pulverförmigen Nebengruppen-Metall oder -Metalloxid wie z.B. Palladiuim, Pd(Al₂O₃) oder Palladium-beschichtetes Pulver zur Verbesserung der Kontaminationsbeständigkeit von Wasserstoff-Speicherwerkstoff. Die DE 33 40 492 A1 betrifft ein Verfahren zur Herstellung von feinverteiltem, hochreaktivem Magnesium aus Magnesiumhydrid, Magnesiumanthracen und/oder seinen Derivaten wobei die jeweilige Magnesium enthaltende Verbindung in Gegenwart eines Reaktionspartners thermisch zersetzt wird. Die WO 01/68515 A1 offenbart die Verwendung von Übergangsmetallverbindungen in katalytischen Mengen zur Verbesserung der Hydrier-/Dehydrierkinetik in Alkalimetallalanaten. Die genannten Verfahren weisen den Nachteil relativ hoher zusätzlicher Materialkosten auf. Zudem können Katalysatoren nicht mehr oder nur sehr schwierig in das Wasserstoffspeichermaterial eingebracht werden, wenn dieses bereits in einem Tank eingebracht wurde. Zur Regeneration von Wasserstoffspeichermaterial eignen sich die genannten Verfahren folglich überhaupt nicht.

Aufgabe der vorliegenden Erfindung ist es somit ein Verfahren zur Aktivierung oder Regeneration eines Wasserstoffspeichermaterials, das mindestens ein Metallhydrid enthält, bereitzustellen, das kostengünstig durchführbar ist, auch wenn das Wasserstoffspeichermatieral bereits in einem Tank desselben verfüllt ist, und die Nachteile des Standes der Technik nicht aufweist.

Erfindungsgemäß wird die Aufgabe durch ein Verfahren zur Aktivierung oder Regeneration eines Wasserstoffspeichermaterials gelöst, das mindestens ein Metallhydrid enthält, bei dem das mindestens eine Metallhydrid mit einem inerten Lösungsmittel, das unter den Kontaktbedingungen nicht mit dem Wasserstoffspeicher-material chemisch reagiert, es insbesondere nicht oxidiert oder reduziert, in Kontakt gebracht wird und das inerte Lösungsmittel anschließend wieder entfernt wird, dadurch gekennzeichnet, dass das Wasserstoffspeichermaterial ein komplexes Borhydrid, ein Magnesiumhydrid oder ein Metallhydrid ausgewählt aus der Gruppe bestehend aus LiAlH₄, Li₃AlH₆, Li-Na₂AlH₆, Ca(AlH₄)₂ oder Kombinationen davon enthält. Vorzugsweise wird das inerte Lösungsmittel dem Wasserstoffspeichermaterial in einem Tank desselben zugegeben.

Das inerte Lösungsmittel ist vorzugsweise ausgewählt aus der Gruppe bestehend aus einem Alkohol, bevorzugter Ethanol oder Tetrahydrofuran, einem Ether, bevorzugter Diethylether, einem Keton, bevorzugter Aceton, Ammoniak, einem Amin, einem Amid oder Kombinationen davon. Am meisten bevorzugt ist Ethanol.

Die Zeitspanne zwischen kontaktieren des Wasserstoffspeichermaterials mit inertem Lösungsmittel und entfernen des inerten Lösungsmittels beträgt vorzugsweise zwischen 5 Sekunden und 60 Minuten, bevorzugter zwischen 10 Sekunden und 60 Minuten, am meisten bevorzugt zwischen 10 Sekunden und 10 Minuten.

Anschließend wird das Lösungsmittel wieder entfernt. Dies geschieht vorzugsweise durch Anlegen eines Vakuums oder Erwärmung des mit dem inerten Lösungsmittel kontaktierten Wasserstoffspeichermaterials.

Die Erfindung wird durch die Figuren beispielhaft erläutert, in denen:

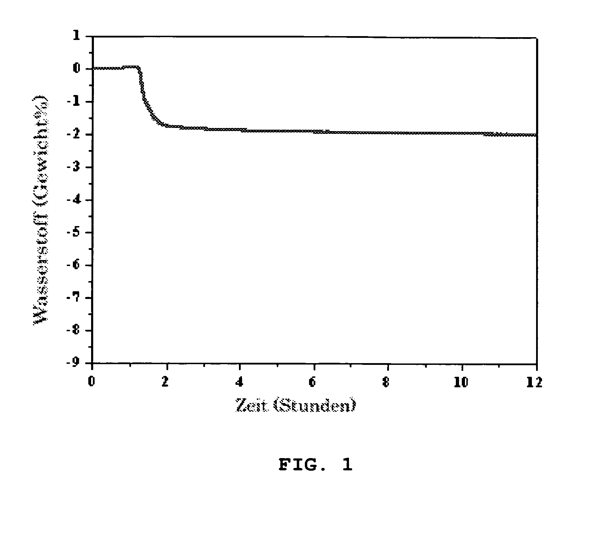

**Figur 1** die Dehydrierung eines vor Durchführung des Experiments 5 Stunden gemahlenen Systems 2 NaBH₄ + MgH₂ bei 450°C im Vakuum zeigt,

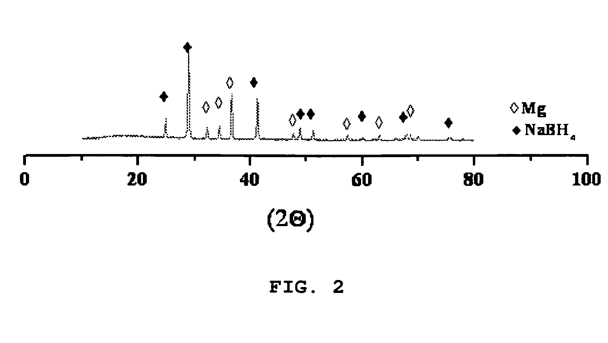

**Figur 2** das Röntgenbeugungsdiagramm des Systems 2 NaBH₄ + MgH₂ aus Figur 1 (ohne Kontaktierung mit Wasser) zeigt,

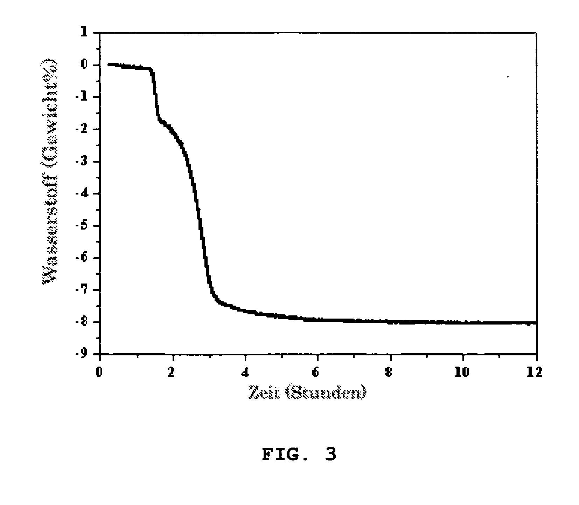

**Figur 3** die Dehydrierung eines vor Durchführung des Experiments 5 Stunden gemahlenen Systems 2 NaBH₄ + MgH₂ bei 450°C im Vakuum nach Injektion und Entfernung von Wasser zeigt,

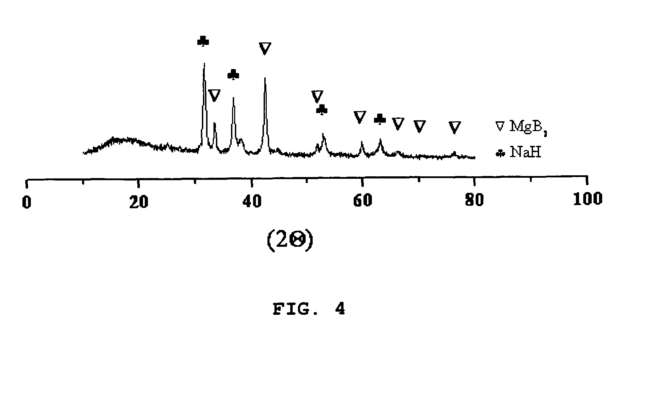

**Figur 4** das Röntgenbeugungsdiagramm des Systems 2 NaBH₄ + MgH₂ aus Figur 3 (nach Kontaktierung mit und Entfernung von Wasser) zeigt,

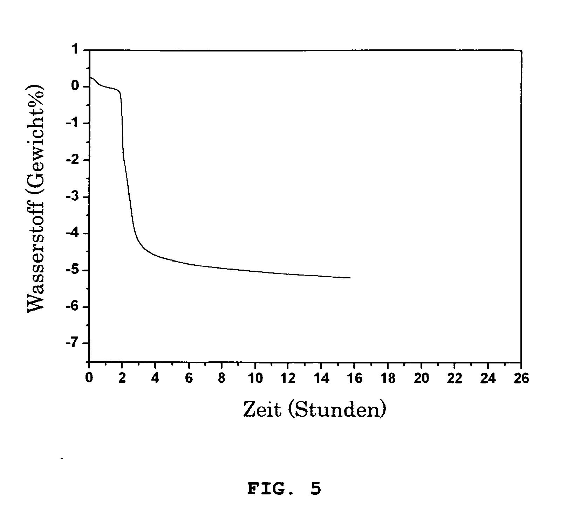

**Figur 5** die Dehydrierung eines vor Durchführung des Experiments 5 Stunden gemahlenen Systems 2 NaBH₄ + MgH₂ bei 450°C im Vakuum nach Injektion und Entfernung von Ethanol zeigt, wobei die Kontaktzeit 10 Sekunden betrug, und

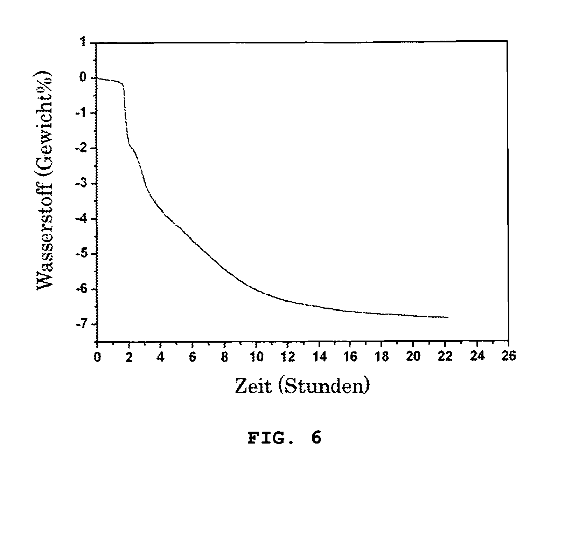

**Figur 6** die Dehydrierung eines vor Durchführung des Experiments 5 Stunden gemahlenen Systems 2 NaBH₄ + MgH₂ bei 450°C im Vakuum nach Injektion und Entfernung von Ethanol zeigt, wobei die Kontaktzeit 10 Minuten betrug.

Die Figuren zeigen, dass nach Kontaktierung und Entfernug des inerten Lösungsmittels nicht nur die Reaktionsgeschwindingkeit steigt, sondern überraschenderweise auch die Dehydrierung vollständiger verläuft.

Das vorliegende Verfahren ist insbesondere dann vorteilhaft, wenn das Wasserstoffspeichermaterial mindestens zwei Metallhydride enthält, die miteinander bei der Absorption und Desorption in Wechselwirkung treten. Mindestens eine der Komponenten, vorzugsweise ein komplexes Borhydrid und/oder ein komplexes Aluminiumhydrid müssen dabei in dem inerten Lösungsmittel, vorzugsweise bei Umgebungstemperatur (etwa 20 bis 25°C) löslich sein. Als inerte Lösungsmittel für komplexe Borhydride, wie NaBH₄ sind koordinierende Lösungsmittel wie Wasser, Alkohole, z.B. Ethanol, Ammoniak, Amine wie Methylamin oder Ethylamin oder Ether wie Diethylether oder Tetrahydrofuran besonders bevorzugt. Als inerte Lösungsmittel für Alumuniumhydride sind Ether wie Diethylether, Tetrahydrofuran, Monoglyme, Diglyme, Triglyme, Tetraglyme, Dioxan oder Dibutylether besonders bevorzugt.

## Patentansprüche

1. Verfahren zur Aktivierung oder Regeneration eines Wasserstoffspeichermaterials, das mindestens ein Metallhydrid enthält, bei dem das mindestens eine Metallhydrid mit einem inerten Lösungsmittel, das unter den Kontaktbedingungen nicht mit dem Wasserstoffspeichermaterial chemisch reagiert, in Kontakt gebracht wird und das inerte Lösungsmittel anschließend wieder entfernt wird, **dadurch gekennzeichnet, dass** das Wasserstoffspeichermaterial ein komplexes Borhydrid, ein Magnesiumhydrid oder ein Metallhydrid ausgewählt aus der Gruppe bestehend aus LiAlH₄, Li₃AlH₆, LiNa₂AlH₆, Ca (AlH₄) ₂ oder Kombinationen davon enthält.

2. Verfahren nach Anspruch 1, bei dem das Wasserstoffspeichermaterial mindestens ein Metallhydrid ausgewählt aus der Gruppe bestehend aus LiBH₄, NaBH₄, Ca (BH₄)₂, LiAlH₄, Ca (AlH₄)₂ in Kombination mit MgH₂ enthält.

3. Verfahren nach einem der vorgehenden Ansprüche, bei dem das inerte Lösungsmittel ausgewählt ist aus der Gruppe bestehend aus einem Alkohol, vorzugsweise Ethanol oder Tetrahydrofuran, einem Ether, vorzugsweise Diethylether, einem Keton, vorzugsweise Aceton, Ammoniak, einem Amin, einem Amid oder Kombinationen davon.

4. Verfahren nach einem der vorgehenden Ansprüche, bei dem das inerte Lösungsmittel durch Anlegen eines Vakuums oder Erwärmung entfernt wird.

5. Verfahren nach einem der vorgehenden Ansprüche, bei dem die Zeitspanne zwischen kontaktieren des Wasserstoffspeichermaterials mit inertem Lösungsmittel und entfernen des inerten Lösungsmittels zwischen 5 Sekunden und 10 Minuten, vorzugsweise zwischen 10 Sekunden und 5 Minuten beträgt.

## Claims

1. Process for activating or regenerating of a hydrogen storage material, which contains at least one metal hydride, wherein the at least one metal hydride is brought into contact with an inert solvent which does not chemically react with the hydrogen storage material under contact conditions, and the inert solvent is subsequently removed again, **characterized in that** the hydrogen storage material contains a complex boron hydride, a magnesium hydride or a metal hydride which is selected from the group consisting of LiAlH₄, Li₃AlH₆, LiNa₂AlH₆, Ca(AlH₄)₂ or combinations thereof.

2. Process according to claim 1, wherein the hydrogen storage material comprises at least one metal hydride selected from the group consisting of LiBH₄, NaBH₄, Ca(BH₄)₂, LiAlH₄, Ca(AlH₄)₂ in combination with MgH₂.

3. Process according to any of the preceding claims, wherein the inert solvent is selected from the group consisting of an alcohol, preferably ethanol or tetrahydrofurane, an ether, preferably a diethylether, a ketone, preferably acetone, ammonia, an amine, an amide or combinations thereof.

4. Process according to any of the preceding claims, wherein the inert solvent is removed by applying a vacuum or heating.

5. Process according to any of the preceding claims, wherein the period of time between contacting of the hydrogen storage material with the inert solvent and removal of the inert solvent is from 5 seconds to 10 minutes, preferably from 10 seconds to 5 minutes.

## Revendications

1. Procédé d'activation ou de régénération d'un matériau accumulateur d'hydrogène qui contient au moins un hydrure de métal, dans lequel on met cet hydrure de métal au nombre d'au moins un en contact avec un solvant inerte qui, dans les conditions de ce contact, ne réagit pas chimiquement avec le matériau accumulateur d'hydrogène, et l'on en sépare ensuite à nouveau le solvant inerte, et lequel procédé est **caractérisé en ce que** le matériau accumulateur d'hydrogène est un hydrure de bore complexe, un hydrure de magnésium ou un hydrure de métal choisi dans l'ensemble constitué par les hydrures de formules LiAlH₄, Li₃AlH₆, LiNa₂AlH₆ et Ca(AlH₄)₂, ou une combinaison de tels hydrures.

2. Procédé conforme à la revendication 1, dans lequel le matériau accumulateur d'hydrogène contient au moins un hydrure de métal choisi dans l'ensemble constitué par les hydrures de formules LiBH₄, NaBH₄, Ca(BH₄)₂, LiAlH₄ et Ca(AlH₄)₂, en combinaison avec de l'hydrure de magnésium MgH₂.

3. Procédé conforme à l'une des revendications précédentes, dans lequel le solvant inerte est choisi dans l'ensemble formé par un alcool, de préférence l'éthanol, le tétrahydrofurane, un éther, de préférence l'éther diéthylique, une cétone, de préférence l'acétone, l'ammoniac, une amine, un amide, et les combinaisons de tels solvants.

4. Procédé conforme à l'une des revendications précédentes, dans lequel on sépare le solvant inerte en mettant le mélange sous vide ou en le chauffant.

5. Procédé conforme à l'une des revendications précédentes, dans lequel le laps de temps qui s'écoule entre le moment où l'on met le matériau accumulateur d'hydrogène en contact avec le solvant inerte et celui où l'on sépare le solvant inerte dure entre cinq secondes et dix minutes, et de préférence entre dix secondes et cinq minutes.
